# EUROPÄISCHE PATENTSCHRIFT

(11) **EP 1 915 542 B1**
(45) Veröffentlichungstag und Bekanntmachung des Hinweises auf die Patenterteilung: **07.03.2012**
(21) Anmeldenummer: 06776600.6
(22) Anmeldetag: 04.08.2006
(51) Int. Cl.: F16C 29/02

(54) **HYDROSTATISCHE PROFILSCHIENENFÜHRUNG**
HYDROSTATIC PROFILE RAIL GUIDE
GUIDE A RAIL PROFILE HYDROSTATIQUE

(30) Priorität: 13.08.2005 DE 102005038346
(43) Veröffentlichungstag der Anmeldung: 30.04.2008
(73) Patentinhaber: Schaeffler Technologies GmbH & Co. KG, 91074 Herzogenaurach (DE)
(72) Erfinder: RUDY, Dietmar, 66501 Kleinbundenbach (DE); BAUER, Wolfgang, 66292 Riegelsberg (DE)
(86) Internationale Anmeldenummer: PCT/EP2006/007724
(87) Internationale Veröffentlichungsnummer: WO 2007/019971

(56) Entgegenhaltungen:
- CH-A- 459 670
- DE-C1- 3 917 673
- JP-A- 56 049 416
- US-A- 6 012 845

## Beschreibung

Die vorliegende Erfindung betrifft eine hydrostatische Profilschienenführung, mit einem Führungswagen, der auf einer Führungsschiene hydrostatisch lagerbar ist.

Aus DE 38 31 676 C1 beispielsweise ist eine hydrostatische Profilschienenführung bekannt geworden, bei der ein Führungswagen auf einer Führungsschiene hydrostatisch gelagert ist. Die Führungsschiene ist mit einer entlang ihrer Längsachse erstreckten Mittelfläche und mit zwei zu beiden Längsseiten der Mittelfläche angeordneten oberen Lagerflächen versehen, die geneigt zu dieser Mittelfläche angeordnet sind. Unterhalb jeder oberen Lagerfläche ist eine zu dieser oberen Lagerfläche und zu der Mittelfläche geneigt angeordnete untere Lagerfläche vorgesehen. Im Querschnitt durch die Profilschienenführung gesehen wird ein Dreieck aufgespannt durch eine zu der Mittelfläche der Führungsschiene gedachten ersten parallelen Geraden, durch eine zu der oberen Lagerfläche gedachten zweiten parallelen Geraden und durch eine zu der unteren Lagerfläche gedachten dritten parallelen Geraden. In diesem Dreieck ist ein Winkel α gebildet zwischen der ersten und der zweiten Geraden. In diesem Dreieck ist ferner ein Winkel γ gebildet zwischen der ersten und der dritten Geraden.

Unterhalb dieser beiden im Kopfbereich der Führungsschiene vorgesehenen oberen und unteren Lagerflächen sind im Fußbereich der Führungsschiene zu deren beiden Längsseiten zwei Notlaufflächen vorgesehen, die mit den unteren Lagerflächen des Kopfbereiches einen Winkel β begrenzen, der maximal 90° beträgt.

Der auf die Führungsschiene aufgesetzte Führungswagen ist ebenfalls mit oberen und unteren Lagerflächen versehen, die mit den oberen und unteren Lagerflächen der Führungsschiene zusammenwirken. Zwischen den jeweiligen Lagerflächen der Führungsschiene und des Führungswagens sind Drucktaschen ausgebildet, in denen ein hydrostatischer Druck aufgebaut werden kann. Der hydrostatische Druck ermöglicht eine einwandfreie Lagerung des Führungswagens auf der Führungsschiene.

Die Einsatzmöglichkeiten derartiger hydrostatischer Profilschienenführungen können dadurch beschränkt sein, dass die Schenkel des Führungswagens unter einer anliegenden Last aufbiegen können. In diesem Fall können die in den Drucktaschen aufgebauten Druckpolster unter Umständen nicht aufrecht erhalten werden, sodass ein einwandfreier Betrieb der hydrostatischen Profilschienenführung nicht gewährleistet ist. Derartige Probleme können beispielsweise dadurch behoben werden, dass die äußeren Proportionen des Führungswagens vergrößert werden, sodass die Schenkel des Führungswagens steifer werden. Allerdings sind derartige Veränderungen mit dem Nachteil behaftet, dass ein Austausch von Profilschienenwälzführungen gegen hydrostatische Profilschienenführungen nicht möglich ist. Gemäß DIN 645-1 ist die äußere Geometrie von Profilschienenwälzführungen vorgegeben. Bekannte hydrostatische Profilschienenführungen können nicht als Ersatz für gängige Profilschienenwälzführungen eingesetzt werden, da für die Gewährleistung eines einwandfreien Betriebs bei vergleichbaren Belastungen dieser hydrostatischen Profilschienenführungen eine Veränderung der äußeren Proportionen erforderlich ist, so dass der DIN 645-1 nicht entsprochen ist.

Aufgabe der vorliegenden Erfindung ist es, eine hydrostatische Profilschienenführung nach den Merkmalen des Oberbegriffs des Anspruchs 1 anzugeben, bei der ein einwandfreier Betrieb gewährleistet und die als Ersatz für eine Profilschienenwälzführung geeignet ist.

Erfindungsgemäß wird diese Aufgabe dadurch gelöst, dass der oben erwähnte Winkel α Werte von 10° bis einschließlich 45° und dass der oben erwähnte Winkel γ Werte von 20° bis einschließlich 55° aufweist. Bei dem erfindungsgemäßen Zusammenspiel dieser beiden Winkel Bereiche α und γ können die Führungsschienen und die Führungswagen so zueinander angepasst werden, dass einerseits eine hinreichende Steifigkeit der hydrostatischen Profilschienenführungen gewährleistet ist, wobei andererseits die äußeren Proportionen gemäß DIN 645-1 eingehalten werden können.

Diese Winkel α und γ werden in entsprechender Weise bei dem Führungswagen umgesetzt. Der Führungswagen weist zwei durch einen Boden miteinander verbundene Schenkel, auf. Der Führungswagen umgreift mit diesen beiden Schenkeln die Führungsschiene. Der Boden ist einerseits an seiner äußeren Seite mit einer Aufspannebene beispielsweise für Werkzeuge und andererseits mit zwei zu der Aufspannebene geneigt angeordneten, entlang der Längsachse der Profilschienenführung erstreckten oberen Lagerflächen versehen. Diese oberen Lagerflächen sind geneigt zu der Aufspannebene angeordnet. Diese oberen Lagerflächen des Führungswagens sind parallel zu den oberen Lagerflächen der Führungsschiene ausgebildet. Unterhalb der oberen Lagerflächen des Führungswagen sind an jedem Schenkel des Führungswagens jeweils eine zu der oberen Lagerfläche und zu der Aufspannebene geneigt angeordnete untere Lagerfläche vorgesehen. Im Querschnitt durch die Profilschienenführung gesehen spannen eine zu der Aufspannebene gedachte erste parallele Gerade, eine zu der oberen Lagerfläche gedachte zweite parallele Gerade und eine zu der unteren Lagerfläche gedachte dritte parallele Gerade ein Dreieck auf, in dem ein Winkel α gebildet ist zwischen der ersten und der zweiten Geraden und in dem ein Winkel γ gebildet ist zwischen der ersten und der dritten Geraden. Die Beträge der Winkel α und γ sind demzufolge bei dem Führungswagen ebenso wie bei der Führungsschiene ausgebildet .

Eine weitere Optimierung der Steifigkeit wird erfindungsgemäß dadurch erzielt, dass ein Quotient aus dem Verhältnis der Höhe der hydrostatischen Profilschienenführungen zur wirksamen Höhe der Führungsschiene innerhalb des von dem Führungswagen umschlossenen Bereichs ebenfalls zwischen 1,8 und 2,2 einschließlich der genannten Werte eingestellt ist. Die wirksame Höhe der Führungsschiene ist so zu verstehen, dass hier die Höhe zugrunde gelegt wird, die von dem Führungswagen umgriffen ist.

In anderen Worten ausgedrückt ist die wirksame Höhe der Führungsschiene gegeben durch die Differenz der Beträge der Gesamthöhe der Führungsschiene abzüglich der Fußhöhe der Führungsschiene die gegeben ist durch den Abstand von der Unterseite der Schenkel des Führungswagens bis zur Fußfläche der Führungsschiene.

In erfindungsgemäßer Weiterbildung kann die Breite des Führungswagens zu der Höhe der hydrostatischen Profilschienenführung in einem Verhältnis stehen, dessen Quotient Werte zwischen 1,8 und 2,2 einschließlich dieser genannten Werte betragen kann. Die Breite ist festgelegt durch die Breite des Führungswagens, die Höhe ist festgelegt durch den Abstand der Fußfläche der Führungsschiene zu der Oberseite des Führungswagens. Die Oberseite des Führungswagens kann zugleich die Aufspannebene des Führungswagens sein.

Die erfindungsgemäß vorgeschlagenen Winkelbereiche α und β ermöglichen des Weiteren Quotienten mit übereinstimmenden Beträgen - also zwischen 1,8 und 2,2 einschließlich dieser Werte - aus dem Verhältnis der Breite des Führungswagens zu der Breite der Führungsschiene innerhalb des Umgriffs von dem Führungswagen. Die Breite der Führungsschiene innerhalb des Umgriffs ist so definiert, dass innerhalb des von dem Führungswagen umgriffenen Bereichs der Führungsschiene die größte Breite der Führungsschiene für die Ermittlung dieses Quotienten zugrunde gelegt wird. Der Wertebereich zwischen 1,8 und 2,2 ist bei erfindungsgemäßen hydrostatischen Profilschienenführungen für die Einhaltung der nach DIN 645-1 geforderten äußeren Werte bei gleichzeitiger hoher Steifigkeit besonders günstig.

Es wurde weiter oben bereits ausgeführt, dass zwischen den korrespondierenden oberen und unteren Lagerflächen des Führungswagens und der Führungsschiene Drucktaschen ausgebildet sind. Gemäß einer erfindungsgemäßen Weiterbildung sind alle Drucktaschen jeweils mit einer einstellbaren Drossel zur Einstellung eines hydrostatischen Drucks in der Drucktasche versehen. Diese erfindungsgemäße Weiterbildung hat den Vorteil, dass Druckschwankungen aufgrund von elastischen Verformungen des Führungswagens durch Korrektureinstellungen an den Drosseln korrigiert werden können, sodass beispielsweise bei einem leichten Druckabfall an einer Drucktasche durch weiteres Öffnen der Drossel eine gewünschte Druckzunahme wieder eingestellt werden kann.

Dadurch, dass die Mittelfläche der Führungsschiene nicht zugleich Lagerfläche der hydrostatischen Profilschienenführung ist, ist es in einer erfindungsgemäßen Weiterbildung vorgesehen, entlang dieser Mittelfläche eine Vielzahl von Durchgangsöffnungen zur Durchführung von Befestigungsschrauben vorzusehen. Die Führungsschiene kann somit problemlos an einem anderen Maschinenteil angeschraubt werden, ohne dass die Oberfläche der Mittelfläche besonderen Anforderungen genügen muß.

Nachstehend wird die Erfindung anhand eines in insgesamt vier Figuren abgebildeten Ausführungsbeispieles erläutert. Es zeigen:
- Figur 1: eine erfindungsgemäße hydrostatische Profilschienenführung in perspektivischer Darstellung,
- Figur 2: einen Querschnitt durch die erfindungsgemäße hydrostatischen Profilschienenführung aus Figur 1,
- Figur 3: einen weiteren Querschnitt durch die erfindungsgemäße Profilschienenführung und
- Figur 4: einen weiteren Querschnitt durch die erfindungsgemäße Profifschienenführung.

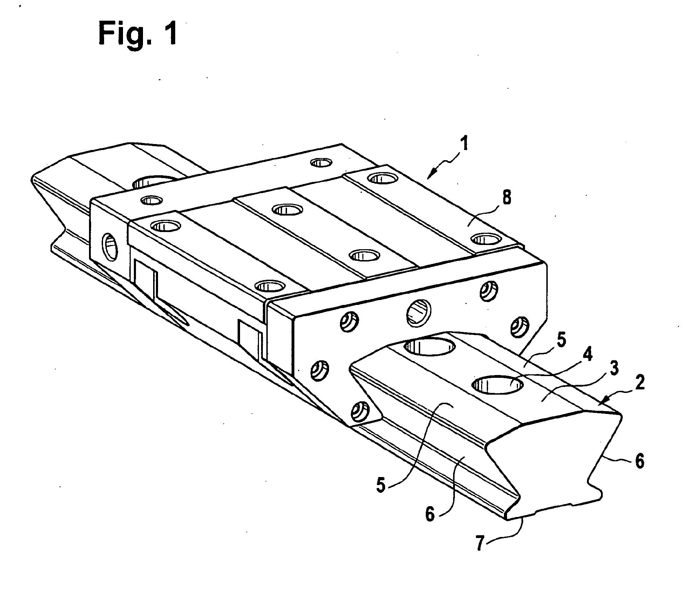

Die in den Figuren 1 bis 4 abgebildete erfindungsgemäße Profilschienenführung umfasst einen Führungswagen 1, der auf einer Führungsschiene 2 hydrostatisch gelagert ist. Die Führungsschiene 2 hat einen Kopfabschnitt der dem Führungswagen 1 zugewandt ist und einen Fußabschnitt, der einem hier nicht abgebildeten Maschinenteil zugewandt ist, auf dem die Führungsschiene 2 befestigt ist. An ihrem Kopfabschnitt ist die Führungsschiene 2 entlang der Längsachse der Profilschienenführung mit einer Mittelfläche 3 versehen. Die Führungsschiene 2 ist mit einer Vielzahl von entlang der Führungsschiene angeordneten Durchgangsöffnungen 4 versehen, durch die hier nicht abgebildete Befestigungsschrauben zum Befestigen der Führungsschiene an dem weiter oben erwähnten Maschinenteil vorgesehen sind. Diese Durchgangsöffnungen 4 durchbrechen die Mittelfläche 3 der Führungsschiene 2.

Die Führungsschiene 1 ist an ihrem Kopfabschnitt mit zwei oberen Lagerflächen 5 und zwei unteren Lagerflächen 6 versehen. Die oberen Lagerflächen 5 sind eben ausgebildet; Sie sind zu der Mittelfläche 3 geneigt angeordnet, wobei die eine obere Lagerfläche 5 zur einen Seite der Mittelfläche 3 und die andere obere Lagerfläche 5 zur anderen Längsseite der Mittelfläche 3 angeordnete ist. Die unteren Lagerflächen 6 sind unterhalb der oberen Lagerflächen 5 angeordnet. Diese unteren Lagerflächen 6 sind sowohl zu der Mittelfläche 3 als auch zu den oberen Lagerflächen 5 geneigt angeordnet.

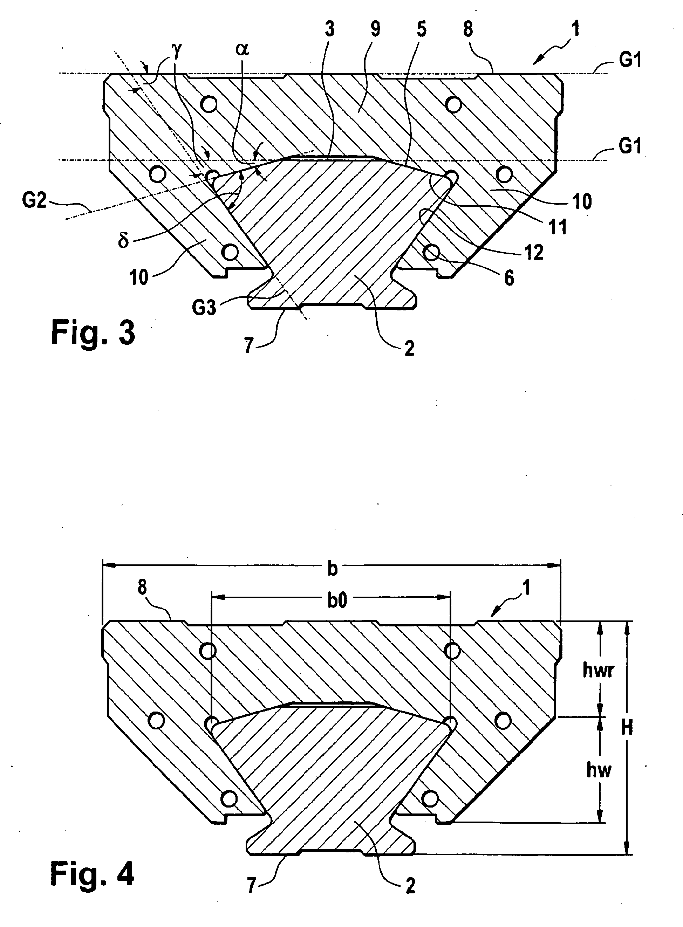

Figur 3 zeigt die erfindungsgemäße hydrostatische Profilschienenführung im Querschnitt. Hier ist zu erkennen, dass die Mittelfläche 3 parallel zu einer Fußfläche 7 der Führungsschiene 2 angeordnet ist, wobei diese Fußfläche 7 die Auflagerfläche der Führungsschiene 2 für das hier nicht abgebildete Maschinenteil ist.

Eine zu der Mittelfläche 3 gedachte erste parallele Gerade G1 und eine zu der oberen Lagerfläche 5 gedachte zweite parallele Gerade G2 und eine zu der unteren Lagerfläche 6 gedachte dritte parallele Gerade G3 spannen ein Dreieck auf. In diesem Dreieck ist ein Winkel α gebildet zwischen der ersten und der zweiten Geraden G1 und G2. Ein Winkel γ ist gebildet zwischen der ersten und der dritten Geraden G1, G3. Erfindungsgemäß ist der Winkel α auf Werte zwischen 10° bis einschließlich 45° und der Winkel γ auf Werte von 20° bis einschließlich 55° eingestellt. Im Schnittpunkt der zweiten und der dritten Geraden G2, G3 ist ein Winkel δ gebildet, der sich rein rechnerisch aus den beiden eingangs erwähnten Winkeln α und γ ermitteln lässt. Mit diesen erfindungsgemäß vorgesehenen Winkelbereichen ist einerseits eine optimale Kräfteverteilung an der Führungsschiene 2 und an dem Führungswagen 1 eingestellt. Andererseits hat sich herausgestellt, dass bei diesen vorgeschlagenen Winkelbereichen die Proportionen von Führungswagen und Führungsschiene derart eingestellt werden können, dass die Vorgabe der DIN 645-1 eingehalten werden können, wobei die Belastbarkeit der erfindungsgemäßen hydrostatischen Profilschienenführung vergleichbar ist mit einer Profilschienenwälzführung der gleichen Größe.

Der Figur 3 ist ferner zu entnehmen, dass die Gerade G1 auch parallel zu einer Aufspannfläche 8 des Führungswagens 1 angeordnet ist, wobei auf diese Aufspannfläche 8 beispielsweise Werkzeuge aufgesetzt und an dem Führungswagen 1 befestigt werden können.

Weitere Einzelheiten zu dem Führungswagen 1 sind der Figur 3 zu entnehmen: Der Führungswagen 1 weist zwei durch einen Boden 9 einstückig miteinander verbundene Schenkel 10 auf, die die Führungsschiene 2 umgreifen. Der Boden 9 ist einerseits an seiner der Führungsschiene 2 zugewandten Seite mit zwei oberen Lagerflächen 11 versehen, die den beiden oberen Lagerflächen 5 der Führungsschiene 2 einwandfrei gegenüberliegend und parallel zu den oberen Lagerflächen 5 der Führungsschiene 2 angeordnet sind. Diese oberen Lagerflächen 11 sind gegenläufig geneigt zu der Aufspannfläche 8 des Führungswagens 1 angeordnet. Andererseits ist der Boden 9 mit der bereits erwähnten Aufspannfläche 8 versehen.

Jeder Schenkel 10 des Führungswagens 1 ist zudem mit einer unteren Lagerfläche 12 versehen, die der unteren Lagerfläche 6 der Führungsschiene 2 einwandfrei gegenüberliegend und parallel dazu angeordnet ist. Die beiden unteren Lagerflächen 12 sind gegenläufig geneigt und jeweils sowohl gegenüber der oberen Lagerfläche 11 als auch gegenüber der Aufspannebene 8 geneigt angeordnet.

Die bereits oben zu der Führungsschiene 2 erwähnten Geraden G2 und G3 sind erkennbar parallel zu den oberen Lagerflächen 11 und parallel zu den unteren Lagerflächen 12 Führungswagens 1 angeordnet. Gemeinsam mit der zu der Aufspannfläche gedachten parallelen Geraden G1 bilden diese Geraden G1, G2, G3 ein Dreieck, dass von seinen Winkelverhältnissen her übereinstimmend ist mit dem Dreieck, wie es bereits weiter oben zu der Führungsschiene 2 beschrieben wurde.

Wenn die Führungsschiene 2 und der Führungswagen 1 mit den erfindungsgemäß vorgeschlagenen Winkelbereichen ausgebildet sind, werden optimale Steifigkeiten erreicht, wenn die Breite des Führungswagens 1 und die gesamte Bauhöhe der hydrostatischen Profilschienenführung so eingestellt sind, dass ein Quotient aus dem Verhältnis der Breite des Führungswagens zu der Bauhöhe der hydrostatischen Profilschienenführung Werte zwischen 1,8 und 2,2 einschließlich dieser genannten Werte eingestellt ist.

Figur 4 zeigt die Breite b des Führungswagens 1 und gesamte Bauhöhe H der Profilschienenführung. Diese Höhe H ist festgelegt durch den Abstand zwischen der Aufspannfläche 8 des Führungswagens 1 und der Fußfläche 7 der Führungsschiene 2.

Bei dieser erfindungsgemäßen hydrostatischen Profilschienenführung ist in vorteilhafter Weise ein Breitenverhältnis des Führungswagens 1 im Verhältnis zur Breite der Führungsschiene 2 innerhalb des Kopfbereiches ebenfalls so eingestellt, dass der Quotient Werte zwischen 1,8 und 2,2 einschließlich der genannten Werte aufweisen kann. Die Breite b0 wird dort gemessen wo die unteren und oberen Lagerflächen 5,6 etwa in einem gemeinsamen Zentrum sich treffen.

Die Gesamthöhe H der erfindungsgemäßen Profilschienenführung ist im Verhältnis zur wirksamen Höhe der Führungsschiene 2 so eingestellt, dass der Quotient aus diesem Verhältnis Werte zwischen 1,8 und 2,2 einschließlich dieser genannten Werte erreichen kann. Die wirksame Höhe hw ist dabei gegeben durch die Differenz der Gesamthöhe der Führungsschiene abzüglich der freien Fußhöhe der Führungsschiene 2, die gegeben ist durch den Abstand von der Unterseite der Schenkel 10 bis zur Fußfläche 7 der Führungsschiene 2.

Bei den hier angegebenen erfindungsgemäßen Winkelbereichen werden für alle hier angegebenen Verhältnisse einheitliche Bereiche der Quotienten vorgeschlagen. Mit diesen Bereichen für die Quotienten und mit diesen erfindungsgemäßen Winkelbereichen läßt sich die erfindungsgemäße Profilschienenführung problemlos an die genormten Maße für Profitschienenwälzführungen der DIN 645-1 anpassen, wobei die hier vorgeschlagenen erfindungsgemäßen Profilschienenführungen gleiche Belastungen wie bei den vergleichbaren Profilschienenwälzführungen ermöglichen. Das bedeutet, dass die erfindungsgemäßen hydrostatischen Profilschienenführungen problemlos als Ersatz für Profilschienenwälzführungen vorgesehen werden können.

Die DIN 645-1 sieht genormte Baureihen 15, 20, 25, 30, 35, 45, 55, 65 vor. Bei den kleineren Baureihen von 15 bis etwa 30 sind insbesondere erfindungsgemäße hydrostatische Profilschienenführungen vorgesehen, bei denen der hier weiter oben angegebene Quotient für die unterschiedlichen Breiten- und Höhen-Verhältnisse zwischen 1,8 und 1,9 angegeben wird. Für die größeren Baureihen bis zu Baureihe 65 soll dieser Quotient Werte zwischen 2,0 und 2,2 erreichen. Es hat sich überraschender Weise herausgestellt, dass die hier vorgeschlagene erfindungsgemäße hydrostatische Profilschienenführung dann optimal ausgelegt ist, wenn die hier angegebenen Quotienten so eingestellt sind, dass sie vom Betrag her so groß sind wie das jeweilige Verhältnis B/H der entsprechenden Größe oder Baureihe der DIN 645-1. Wenn also beispielsweise eine erfindungsgemäße hydrostatische Profilschienenführung ausgelegt werden soll, die als Ersatz für die Baureihe der Größe 45 laut DIN 645-1 vorgesehen ist, werden die erfindungsgemäß angegeben Breiten- und Höhenverhältnisse so eingestellt, dass der Quotient dem Wert 2 einnimmt. Dieser Wert 2 entspricht gerade dem laut DIN 645-1 vorgesehenen Verhältnis, das sich ergibt aus dem Verhältnis der Breite A des Führungswagens im Verhältnis zur Gesamthöhe der Profilschienenwälzführung (120/60).

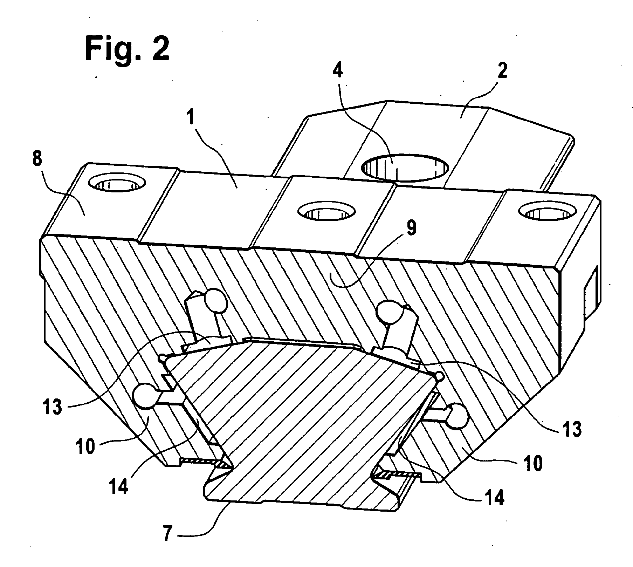

Figur 2 zeigt einen Querschnitt durch die erfindungsgemäße hydrostatische Profilschienenführung, wobei hier die Schnittführung Drucktaschen 13, 14 zeigt, die gebildet sind zwischen den oberen und unteren Lagerflächen 5, 6, 11, 12 des Führungswagens 1 und der Führungsschiene 2. Jede dieser vier Drucktaschen 13, 14 ist mit einer eigenen hier nicht abgebildeten Drossel versehen. An diese erfindungsgemäße hydrostatische Profilschienenführung kann eine Steuereinrichtung angeschlossen werden, die gewährleistet, dass der Druck in jeder Drucktasche 13, 14 separat eingestellt werden kann. Diese separate Einstellung ist insbesondere dann vorteilhaft, wenn aufgrund einer unsymmetrischen oder zu großen Belastung der hydrostatischen Profilschienenführung ein leichtes Verkippen zwischen der Führungsschiene 2 und dem Führungswagen 1 die Folge ist. In dieser verkippten Lage ändern sich die Druckverhältnisse in den Drucktaschen 13, 14. So kann beispielsweise aufgrund einer Abstandszunahme zwischen den jeweiligen Lagerflächen der Führungsschiene und des Führungswagens Öl aus der Drucktasche zu rasch abfließen, sodass der Druck zusammenbricht. In dieser Situation kann nun die für diese Drucktasche vorgesehene Drossel soweit geöffnet werden, bis der Öldruck in der Drucktasche wieder einen Wert erreicht hat, sodass eine einwandfreie Funktion der Profilschienenführung gewährleistet ist.

### Bezugszahlenliste

- 1: Führungswagen
- 2: Führungsschiene
- 3: Mittelfläche
- 4: Durchgangsöffnung
- 5: obere Lagerfläche
- 6: untere Lagerfläche
- 7: Fußfläche
- 8: Aufspannfläche
- 9: Boden
- 10: Schenkel
- 11: obere Lagerfläche
- 12: untere Lagerfläche
- 13: Drucktasche
- 14: Drucktasche

## Patentansprüche

1. Hydrostatische Profilschienenführung, mit einem Führungswagen (1), der auf einer Führungsschiene (2) hydrostatisch gelagert ist, die eine entlang der Längsachse der Profilschienenführung erstreckte Mittelfläche (3) und zwei zu beiden Längsseiten der Mittelfläche (3) angeordnete obere Lagerflächen (5) aufweist, die geneigt zu der Mittelfläche (3) angeordnet sind, wobei unterhalb jeder oberen Lagerfläche (5) eine zu der oberen Lagerfläche (5) und zu der Mittelfläche (3) geneigt angeordnete untere Lagerfläche (6) vorgesehen ist, wobei im Querschnitt durch die Profilschienenführung gesehen eine zu der Mittelfläche (3) gedachte erste parallele Gerade (G1), eine zu der oberen Lagerfläche (5) gedachte zweite parallele Gerade (G2) und eine zu der unteren Lagerfläche (6) gedachte dritte parallele Gerade (G3) ein Dreieck aufspannen, in dem ein Winkel alpha (α) gebildet ist zwischen der ersten und der zweiten Geraden (G1, G2), und in dem ein Winkel gamma (γ) gebildet ist zwischen der ersten und der dritten Geraden (G1, G3), wobei der Führungswagen (1) mit seinen zwei durch einen Boden (9) miteinander verbundenden Schenkeln (10) die Führungsschiene (2) umgreifen kann und auf der Führungsschiene (2) hydrostatisch lagerbar ist, wobei der Boden (9) einerseits eine Aufspannfläche (8) und andererseits zwei zu der Aufspannfläche (8) geneigt angeordnete, entlang der Längsachse der Profüschienenführung erstreckte obere Lagerflächen (11) aufweist, die geneigt zu der Aufspannfläche (8) angeordnet sind, und wobei unterhalb der oberen Lagerflächen (11) an jedem Schenkel (10) eine zu der oberen Lagerfläche (11) und zu der Aufspannfläche (8) geneigt angeordnete untere Lagerfläche (6) vorgesehen ist, wobei im Querschnitt durch die Profilschienenführung gesehen die zu der Aufspannfläche (8) gedachte erste parallele Gerade (G1) und die zu der oberen Lagerfläche gedachte zweite parallele Gerade (G2) und die zu der unteren Lagerfläche gedachte dritte parallele Gerade (G3) das Dreieck aufspannen, **dadurch gekennzeichnet, dass** der Winkel alpha (α) Werte von 10° bis einschließlich 45° und dass der Winkel gamma (γ) Werte von 20° bis einschließlich 55° aufweist, und dass ein Quotient aus dem Verhältnis der Höhe (H) der hydrostatischen Profilschienenführung zur wirksamen Höhe (hw) der Führungsschiene (2) innerhalb des von dem Führungswagen (1) umschlossenen Bereichs zwischen 1,8 und 2,2 eingestellt ist, wobei die wirksame Höhe (hw) der Führungsschiene (2) gegeben ist durch die Differenz der Gesamthöhe der Führungsschiene abzüglich der Fußhöhe der Führungsschiene (2), die gegeben ist durch den Abstand von der Unterseite der Schenkel (10) des Führungswagens (1) bis zur Fußfläche (7) der Führungsschiene (2), und die Höhe (H) festgelegt ist durch den Abstand zwischen der Aufspannfläche (8) des Führungswagens (1) und der Fußfläche (7) der Führungsschiene (2).

2. Hydrostatische Profilschienenführung nach Anspruch 1, bei der der Führungswagen (1) auf die Führungsschiene (2) aufgesetzt ist, und bei der die Führungsschiene (2) mit einer zu der Mittelfläche (3) parallelen Fußfläche (7) als Auflagerfläche für die Führungsschiene (2) versehen ist, wobei ein Quotient aus dem Verhältnis der Breite (B) zu der Höhe (H) der hydrostatischen Profilschienenführung zwischen 1,8 und 2,2 einschließlich der genannten Werte eingestellt ist, wobei die Breite (B) festgelegt ist durch die Breite des Führungswagens (1), und wobei die Höhe (H) festgelegt ist durch den Abstand von der Fußfläche (7) der Führungsschiene (2) zu der Aufspannfläche (8) des Führungswagens (1).

3. Hydrostatische Profilschienenführung nach einem oder mehreren der vorangegangenen Ansprüche, bei der ein Quotient aus dem Verhältnis der Breite (B) des Führungswagens (1) zu der Breite (b0) der Führungsschiene (2) innerhalb des Umgriffs von dem Führungswagen (1) zwischen 1,8 und 2,2 einschließlich der genannten Werte eingestellt ist.

4. Hydrostatische Profilschienenführung nach Anspruch 1, bei der die oberen und die unteren Lagerflächen (11. 12) des Führungswagens (1) mit den oberen und unteren Lagerflächen (5, 6) der Führungsschiene (2) zusammenwirken, wobei an der oberen und der unteren Lagerfläche (11, 12) des Führungswagens (1) Drucktaschen (13, 14) vorgesehen sind zum Aufbau eines hydrostatischen Drucks zwischen den einander zugeordneten Lagerflächen (5, 6, 11, 12) des Führungswagens (1) und der Führungsschiene (2).

5. Hydrostatische Profilschienenführung nach Anspruch 4, bei der alle Drucktaschen (13, 14) mit je einer einstellbaren Drossel zur Einstellung eines hydrostatischen Drucks in der Drucktasche (13, 14) versehen sind.

6. Hydrostatische Profilschienenführung nach Anspruch 1, bei der die Mittelfläche (3) der Führungsschiene (2) von einer Vielzahl entlang der Führungsschiene angeordneter Durchgangsöffnungen (4) zur Durchführung von Befestigungsschrauben durchsetzt ist.

## Claims

1. Hydrostatic profiled-rail guide, having a guide carriage (1) which is hydrostatically mounted on a guide rail (2) which has a central surface (3) which extends along the longitudinal axis of the profiled-rail guide and two upper bearing surfaces (5) which are arranged at both longitudinal sides of the central surface (3) and which are arranged inclined with respect to the central surface (3), with a lower bearing surface (6), which is arranged so as to be inclined with respect to the upper bearing surface (5) and with respect to the central surface (3), being provided below each upper bearing surface (5), with an imaginary first straight line (G1) which is parallel to the central surface (3), an imaginary second straight line (G2) which is parallel to the upper bearing surface (5) and an imaginary third straight line (G3) which is parallel to the lower bearing surface (6) spanning, as viewed in cross section through the profiled-rail guide, a triangle in which an angle alpha (α) is formed between the first and second straight lines (G1, G2) and in which an angle gamma (γ) is formed between the first and the third straight lines (G1, G3), the guide carriage (1) being able, with its two limbs (10) which are connected to one another by means of a base (9), to engage around the guide rail (2) and being able to be hydrostatically mounted on the guide rail (2), with the base (9) having, on one side, a mounting surface (8) and, on the other side, two upper bearing surfaces (11) which are arranged so as to be inclined with respect to the mounting surface (8) and which extend along the longitudinal axis of the profiled-rail guide, which upper bearing surfaces (11) are arranged so as to be inclined with respect to the mounting surface (8), and with a lower bearing surface (6), which is arranged so as to be inclined with respect to the upper bearing surface (11) and with respect to the mounting surface (8), being provided below the upper bearing surfaces (11) on each limb (10), with the imaginary first straight line (G1) which is parallel to the mounting surface (8) and the imaginary second straight line (G2) which is parallel to the upper bearing surface and the imaginary third straight line (G3) which is parallel to the lower bearing surface spanning the triangle, as viewed in cross section through the profiled-rail guide, **characterized in that** the angle alpha (α) has values from 10° up to and including 45° and **in that** the angle gamma (γ) has values from 20 ° up to and including 55°, and **in that** a quotient of the ratio of the height (H) of the hydrostatic profiled-rail guide to the effective height (hw) of the guide rail (2) within the region enclosed by the guide carriage (1) is set between 1.8 and 2.2, the effective height (hw) of the guide rail (2) being given by the difference of the total height of the guide rail minus the base height of the guide rail (2), which is given by the spacing from the underside of the limb (10) of the guide carriage (1) to the base surface (7) of the guide rail (2), and the height (H) being defined by the spacing between the mounting surface (8) of the guide carriage (1) and the base surface (7) of the guide rail (2).

2. Hydrostatic profiled-rail guide according to Claim 1, in which the guide carriage (1) is placed onto the guide rail (2), and in which the guide rail (2) is provided with a base surface (7), which is parallel to the central surface (3), as a support surface for the guide rail (2), with a quotient of the ratio of the width (B) to the height (H) of the hydrostatic profiled-rail guide being set to between 1.8 and 2.2 inclusive of said values, with the width (B) being defined by the width of the guide carriage (1), and with the height (H) being defined by the spacing from the base surface (7) of the guide rail (2) to the mounting surface (8) of the guide carriage (1).

3. Hydrostatic profiled-rail guide as claimed in one or more of the preceding claims, in which a quotient of the ratio of the width (B) of the guide carriage (1) to the width (b0) of the guide rail (2) within the grasp of the guide carriage (1) is set between 1.8 and 2.2 inclusive of said values.

4. Hydrostatic profiled-rail guide according to Claim 1, in which the upper and the lower bearing surfaces (11, 12) of the guide carriage (1) interact with the upper and lower bearing surfaces (5, 6) of the guide rail (2), with pressure pockets (13, 14) being provided on the upper and on the lower bearing surfaces (11, 12) of the guide carriage (1) in order to build up a hydrostatic pressure between the bearing surfaces (5, 6, 11, 12), which are assigned to one another, of the guide carriage (1) and of the guide rail (2).

5. Hydrostatic profiled-rail guide according to Claim 4, in which all the pressure pockets (13, 14) are provided with in each case one adjustable throttle for setting a hydrostatic pressure in the pressure pocket (13, 14).

6. Hydrostatic profiled-rail guide according to Claim 1, in which the central surface (3) of the guide rail (2) is penetrated by a plurality of passage openings (4), which are arranged along the guide rail, for the leadthrough of fastening screws.

## Revendications

1. Guide à rail profilé hydrostatique, avec un chariot de guidage (1), qui est supporté de façon hydrostatique sur un rail de guidage (2), qui présente une face médiane (3) s'étendant le long de l'axe longitudinal du guide à rail profilé et deux faces d'appui supérieures (5) disposées sur les deux côtés longitudinaux de la face médiane (3), qui sont disposées de façon inclinée par rapport à la face médiane (3), dans lequel il est prévu en dessous de chaque face d'appui supérieure (5) une face d'appui inférieure (6) disposée de façon inclinée par rapport à la face d'appui supérieure (5) et à la face médiane (3), dans lequel, vues en coupe transversale à travers le guide à rail profilé, une première droite imaginaire (G1) parallèle à la face médiane (3), une deuxième droit imaginaire (G2) parallèle à la face d'appui supérieure (5) et une troisième droite imaginaire (G3) parallèle à la face d'appui inférieure (6) définissent un triangle, dans lequel un angle alpha (α) est formé entre la première et la deuxième droites (G1, G2) et dans lequel un angle gamma (γ) est formé entre la première et la troisième droites (G1, G3), dans lequel le chariot de guidage (1) peut encadrer le rail de guidage (2) avec ses deux branches (10) reliées par un fond (9) et peut être supporté de façon hydrostatique sur le rail de guidage (2), dans lequel le fond (9) présente d'une part une face de bridage (8) et d'autre part deux faces d'appui supérieures (11) s'étendant le long de l'axe longitudinal du guide à rail profilé et disposées de façon inclinée par rapport à la face de bridage (8), qui sont disposées de façon inclinée par rapport à la face de bridage (8), et dans lequel il est prévu en dessous des faces d'appui supérieures (11), sur chaque branche (10), une face d'appui inférieure (6) disposée de façon inclinée par rapport à la face d'appui supérieure (11) et à la face de bridage (8), dans lequel, vues en coupe transversale à travers le guide à rail profilé, la première droite imaginaire (G1) parallèle à la face de bridage (8) et la deuxième droite imaginaire (G2) parallèle à la face d'appui supérieure et la troisième droite imaginaire (G3) parallèle à la face d'appui inférieure définissent le triangle, **caractérisé en ce que** l'angle alpha (α) présente des valeurs de 10° à 45° inclus et **en ce que** l'angle gamma (γ) présente des valeurs de 20° à 55° inclus, et **en ce que** le quotient du rapport entre la hauteur (H) du guide à rail profilé hydrostatique et la hauteur utile (hw) du rail de guidage (2) est réglé entre 1,8 et 2,2 à l'intérieur de la région encadrée par le chariot de guidage (1), dans lequel la hauteur utile (hw) du rail de guidage (2) est fournie par la différence de la hauteur totale du rail de guidage moins la hauteur de pied du rail de guidage (2), qui est donnée par la distance de la face inférieure des branches (10) du chariot de guidage (1) jusqu'à la face de pied (7) du rail de guidage (2) et la hauteur (H) est fixée par la distance entre la face de bridage (8) du chariot de guidage (1) et la face de pied (7) du rail de guidage (2).

2. Guide à rail profilé hydrostatique selon la revendication 1, dans lequel le chariot de guidage (1) est posé sur le rail de guidage (2), et dans lequel le rail de guidage (2) est doté d'une face de pied (7) parallèle à la face médiane (3) comme face d'appui pour le rail de guidage (2), dans lequel un quotient du rapport de la largeur (B) à la hauteur (H) du guide à rail profilé hydrostatique est réglé entre 1,8 et 2,2, ces deux valeurs comprises, dans lequel la largeur (B) est fixée par la largeur du chariot de guidage (1), et dans lequel la hauteur (H) est fixée par la distance de la face de pied (7) du rail de guidage (2) à la face de bridage (8) du chariot de guidage (1).

3. Guide à rail profilé hydrostatique selon une ou plusieurs des revendications précédentes, dans lequel un quotient du rapport de la largeur (B) du chariot de guidage (1) à la largeur (b0) du rail de guidage (2) est réglé entre 1,8 et 2,2, ces deux valeurs comprises, à l'intérieur de l'emprise du chariot de guidage (1).

4. Guide à rail profilé hydrostatique selon la revendication 1, dans lequel les faces d'appui supérieures et inférieures (11, 12) du chariot de guidage (1) coopèrent avec les faces d'appui supérieures et inférieures (5, 6) du rail de guidage (2), dans lequel il est prévu, sur la face d'appui supérieure et inférieure (11, 12) du chariot de guidage (1), des poches de pression (13, 14) destinées à créer la pression hydrostatique entre les faces d'appui (5, 6, 11, 12) opposées l'une à l'autre du chariot de guidage (1) et du rail de guidage (2).

5. Guide à rail profilé hydrostatique selon la revendication 4, dans lequel toutes les poches de pression (13, 14) sont respectivement munies d'un moyen d'étranglement réglable pour le réglage de la pression hydrostatique dans la poche de pression (13, 14).

6. Guide à rail profilé hydrostatique selon la revendication 1, dans lequel la face médiane (3) du rail de guidage (2) est traversée par une multiplicité d'ouvertures de passage (4) disposées le long du rail de guidage pour le passage de vis de fixation.
